# EUROPEAN PATENT APPLICATION

(11) **EP 4 282 498 A1**
(43) Date of publication of application: **29.11.2023**
(21) Application number: 23020208.7
(22) Date of filing: 04.05.2023
(51) Int. Cl.: A63F 3/00, A63H 18/00, G09D 1/00, G09B 1/00, B60W 30/18, B60W 50/00, G05D 1/00, A63F 9/24, A63F 3/02

(54) **CHIP BOARD SYSTEM**

(30) Priority: 26.05.2022 US 202217824913
(71) Applicant: Podhola, Kamil, 46311 Liberec 30 (CZ)
(72) Inventor: Podhola, Kamil, 46311 Liberec 30 (CZ)

(57) **Abstract**

The invention relates to a chip board system comprising a board with one or more chips and one or more chips readers. The chip can be a memory chip and can be coupled with an interface. The board can be provided with a layer and can be a board game and/or an educational and/or instructional aid. The chip and the reader can be able to emite and/or receive electrical, magnetic or electromagnetic fields. The chip and the reader can use radio frequency identification. The readers can be coupled with an interface and a (thematical) holder. The system can comprise an electronic device with a processor and a memory. The chips can be disposed in a pattern. The reader can be coupled with a vehicle (an aircraft), a water vessel or a product. The system can be modular. Chip board communication and navigation methods are proposed.

## Description

### Technical Field

The invention relates to informational and educational boards provided with chips, to chip board games, board tracks and a chip board based navigation.

### Background Art

Informational and educational boards and board games are popular and important part of social life. Informational and educational boards are widely used in schools, offices, places of interests, tourism. Board games are used to develop social skills, to amuse, to provide a meaningful passtime, etc. Board tracks are a popular sort of modelism providing users with game possibilities but also teaching skills to mainly young people.

A natural person moving in a natural environment uses its brain and its five senses. An autonomous vehicle moving in a natural environment uses its processing unit and its sensors. The natural environment can be completed with an artificial environment according to the sensors' capabilities.

An integrated circuit (a chip) can be connected with any type of a wireless interface (e.g. an antenna) which can use electric fields, magnetic fields or both for data transfer. A pair of chips can communicate if using compatible data and/or power transfer systems.

A radio frequency identification (RFID) systems generally includes a reader (interrogator) and a remote tag (transponder) storing identification data for identifying a person, an article, a parcel or other object. The tag can be active or passive with or without an internal power source. The reader communicates with the tag by radio frequency (RF) generally using a modulated RF interrogation signal and a modulated response including coded identification data to be decoded by the reader to identify the person, article, parcel or other associated object. Passive tags are furher powered by an unmodulated continuous wave (CV). RFID systems use far- or near-field technology depending on the reader - tag distance in comparison with the wavelength of the carrier signal. Far-field systems communicate via an antenna and near-field systems via mutual inductance, capacitance or both. The systems communicate generally on the same RF carrier frequency. For example, various frequency bands may include 125-134 kHz, 13.56 MHz, 856-960 MHz, 900-931.3 MHz, 2.45 GHz.

An RFID reader may consist of a processor (controller) implemented on a CMOS integrated circuit and a radio implemented on one or more CMOS, BiCMOS or GaAS integrated circuits processing signal in the near-field or far-field technology.

The RFID readers may collect data as may be requested from a computer/server from each of the RFID tags within its coverage area. The RFID readers may communicate with the computer/server via a wired or wireless connection and/or via a peer-to-peer communication using any wireless communication technique (e.g. back scatter technique, a wireless LAN technique, etc.). The computer/server may provide data to the RFID tags via the RFID reader or directly. The RFID tag can store the data in a non-volatile memory therein. The wired or wireless connection between the RFID reader and the computer/server may use any wired (e.g. Ethernet, fire wire, etc.) and/or wireless (e.g. IEEE 802.11x, Bluetooth, etc.) communication standards. The RFID systems may include a multitude of RFID readers in a particular area, a multitude of RFID tags associated with objects, personnel, etc. and more computer/servers to provide wide area network coverage.

Near field communication (NFC) devices can act as a reader and as a tag, can typically peer-to-peer communicate. An NFC chip may include an NFC controller, a loop antenna and a secure storage. The NFC chip may perform near field communication by generating an electromagnetic field or an RF field using a current of a feed loop. A suitable chip capacitor may be provided to a desired resonance frequency.

The above information disclosed in this Background section is only for enhancement of understanding of the background of the invention and, therefore, it may contain information that does not form any part of the prior art nor what the prior art may suggest to a person of ordinary skill in the art.

US 7,890,056 (Rofouagaran, et al. [US]) February 15, 2011 discloses a highly integrated and low-cost reader for a radio frequency identification (RFID).

EP2183709B1 (CORNING CABLE SYS LLC [US]) 2017-07-19 discloses an antenna system for an RFID tag which can comprise a serpentine antenna with a shunt.

US6459966B2 (Kanazawa Institute of Technology (KIT) 2001-03-28 discloses a navigation method and device for an autonomous vehicle forming a route for the autnomous vehicle with a plurality of information storing elements placed at specific locations in line (parallel lines) along a passageway, each beacon storing its own location information; as vehicle travels, its information retrieving section comes into sufficient proximity supplying through the transmission of radio wave electricity to activate the information storing element retrieving an information about the vehicle's position and controlling a moving direction. The document discloses exclusively coil antennas to track the route and to recognise a position of the autonomous vehicle.

The documents fail to disclose a chip board communication system comprising a board having dimensions substantially greater than a banking card and providing one or more chips, i.e. integrated circuits (IC) with an energy transfer mean for near field (coils, capacitors) and/or far field (antennas). The documents fail to disclose a (thematically) layered chip board, a three dimensional chip board, a chip board configured to be a (board) game, an educational, instructional, informational, supervision, detection and/or rescue aid. The documents fail to disclose chips/readers with rotatable antennas, readers providing sound and/or image generators. Chips/readers provided in the system coupled with a (thematical) holder. The documents fail to disclose autonomous navigation systems comprising waterways and a navigation system coupled with an offshore vessel. The documents fail to disclose a chip board system with chips/readers coupled with a product. The documents fail to disclose modularity in the sense of the present invention as scallability and/or exchangeability. The documents fail to disclose a chip board communication method. The documents fail to disclose a chipboard navigation method with the steps: providing board chips in a defined pattern (which exceeds the passageway) and a reader to communicate with the chips coupled with an autonomous vehicle or an autonomous offshore vessel; determining a defined board parameter; defining a defined navigation parameter. The documents fail to disclose a navigation method with chips coupled with autonomous vehicles, water vessels and/or products.

### Disclosure of Invention

The object of the present invention is to propose chip board system with one or more chips situated on a board and communicating with one or more readers.

A further object is to propose the chip board system with memory chips.

A further object is to propose the chip board system with the chips/readers comprising or coupled with a defined interface.

A further object is to propose the chip board system with the board provided with a layer.

A further object is to propose the chip board system with a three dimensional board.

A further object is to propose the chip board system with the board configured to be a game for one or more players.

A further object is to propose an aid chip board system.

A further object is to propose the chip board system with the chips/readers emitting/receiving (transceiving) electrical fields, magnetic fields, or combinations.

A further object is to propose the chip board system with the chips/readers comprising or coupled with one or more rotatably mounted antennas.

A further object is to propose the chip board system with radio frequency identification chips and radio frequency identification readers.

A further object is to propose the chip board system with the chips/readers coupled with a holder.

A further object is to propose the chip board system comprising an electronic device with a processor and a memory.

A further object is to propose the chip board system with the chips/readers disposed in one or more patterns.

A further object is to propose the chip board system with the chips/readers coupled with a vehicle or with an offshore vessel.

A further object is to propose the chip board system with one or more chips/readers coupled with a product.

A further object is to propose the chip board system modularly scallable/exchangeable.

Another object is to propose a chip board communication method with steps of providing a board chip and reading the board chip with a provided reader.

Another object is to propose a chip board navigation method with a step of providing board chips in a defined pattern and providing a communicating reader coupled with an at least partially autonomous vehicle or an at least partially autonomous offshore vessel, followed by a step of determining a defined board parameter by the reader, followed by a step of defining a defined navigation parameter.

The chip board navigation method can comprise chips coupled to the at least partially autonomous vehicles, the at least partially autonomous offshore vessels, products, or combinations.

Other and further objects will be explained hereinafter and will be particularly pointed out in the appended claims.

In a first aspect, the invention discloses a chip board system.

In a second aspect, the invention discloses a chip board communication method.

In a third aspect, the invention discloses a chip board navigation method.

### Brief Description of Drawings

The invention will now be described by way of example. Only essential elements of the invention are schematically shown and not to scale to facilitate immediate understanding, emphasis being placed upon illustrating the principles of the invention.
FIG. 1 is a schematic perspective illustration of a chip board system according to the present invention.
FIG. 2 is a perspective illustration of a chip board system with two tracks and readers coupled with model trains.
FIG. 3 is a process flowchart of a chip board communication method.
FIG. 4 is a perspective illustration of a modular three dimensional chip board system comprising a model train track.
FIG. 5 is a perspective illustration of a thematical holder which can be provided in a chip board educational system.
FIG. 6 is a perspective illustration of another thematical holder which can be provided in a chip board game system.
FIG. 7 is a perspective illustration of another thematical holder which can be provided in a chip board supervision system.
FIG. 8 is a side view illustration of another thematical holder which can be used in a chip board game system.
FIG. 9 is a schematic partial plan view of a chip board game system which can comprise a track pattern.
FIG. 10 is a schematic of a multiple-antenna static transmitter/receiver of a radio frequency reader.
FIG. 11 is a perspective illustration of a multiple-antenna dynamic transmitter/receiver of a radio frequency reader.
FIG. 12 is a schematic partial plan view of a three dimensional chip board system in a real environment of a roadway network.
FIG. 13 is a partial plan view of a chip board system in a real environment of a parking.
FIG. 14 is a partial perspective view of a three dimensional chip board system of a building interior.
FIG. 15 is a partial perspective view of a three dimensional chip board home system.
FIG. 16 is a partial perspective view of a three dimensional chip board system provided under a construction.
FIG. 17 is a frontal view of another embodiment of a three dimensional chip board system provided under a construction.
FIG. 18 is a perspective illustration of another chip board system with a highly directional antenna and provided under a construction.
FIG. 19 is a perspective illustration of a another chip board system with highly directional antennas and provided under a construction.
FIG. 20 is a schematic perspective view of a convenient antenna with improved directionality for the system.
FIG. 21 is a schematic perspective view of another convenient directional antenna.
FIG. 22 is a schematic of a chip board navigation method.
FIG. 23 is a perspective illustration of a chip board with two tracks and readers coupled with model cars.
FIG. 24 is a schematic elevation view of a three dimensional chip board underwater system.
FIG. 25 is a perspective illustration of an educational/instructional aid chip board system.
FIG. 26 is a schematic perspective illustration of an offshore detection and rescue aid chip board system.
FIG. 27 is a schematic perspective illustration of a personal supervision, detection and rescue aid chip board system.
FIG. 28 is a schematic perspective illustration of a car detection and rescue aid chip board system.
FIG. 29 is a schematic perspective illustration of a three dimensional chip board with a track and readers coupled with sport equipment.
FIG. 30 is a partial schematic plan view of an onshore/offshore chip board navigation method using a rotatably mounted antenna module.
FIG. 31 is a schematic plan view of an offshore chip board navigation method using a rotatably mounted antenna module.
FIG. 32 is a schematic plan view of another embodiment of a personal supervision, detection and rescue aid three dimensional chip board system.
FIG. 33 is a schematic perspective illustration of another embodiment of a personal supervision and detection aid three dimensional chip board system.
FIG. 34 is a perspective illustration of a modular chip board system comprising a model car and a track.
FIG. 35 is a process flowchart of a chip board onshore navigation method.
FIG. 36 is a process flowchart of a chip board offshore navigation method.

### Best Mode for Carrying Out the Invention

The following detailed description shows the best contemplated modes of exemplary embodiments. The description is made for the purpose of illustrating the general principles of the invention, and in such a detail that a skilled person in the art can recognise the advantages of the invention and can be able to make and use the invention. Additional advantages may be learned by the practice of the invention. The detailed description is not intended to limit the principle of the presented invention, but only to show the possibilities of it. The description and the detailed description are exemplary and explanatory only.

In the following description, for the purposes of explanation, numerous specific details are set forth in order to provide a thorough understanding of various exemplary embodiments. It is apparent, however, that various exemplary embodiments may be practiced without these specific details or with one or more equivalent arrangements. In other instances, well-known structures and devices are shown in a diagram form in order to avoid unnecessarily obscuring various exemplary embodiments.

In the accompanying figures, the size and relative sizes of layers and/or regions may be exaggerated for clarity and descriptive purposes. Also, like reference numerals denote like elements.

Since there are more embodiments of the invention shown in the drawings, no reference numerals has been introduced into the claims for clarity purposes.

The terms used in the claims and the specification shall refer to their synonyms as well.

As used in the claims and the specification, the singular forms are intended to include the plural forms as well and vice versa.

As used in the claims and the specification, the term "board" shall also refer to ground, floor, a staircase, a roadway, an offshore water, a water surface, a real environment, the term shall further refer to an artificially fabricated board, which can be three dimensional, shall refer to a building interior, shall refer to a board with at least one dimension substantially greater than e.g. a payment card, etc. The term "substantially" provides a relativity ranging from a difference of a few percent [e.g. twenty percent] to magnitude differences [e.g. in case of a real 2D or 3D environment, tracks /motorways/, board games, educational boards, etc.]

As used in the claims and the specification, the term "chip" shall preferably refer to an integrated circuit (IC) which can include or can be coupled in a near-field mode with a coil, a capacitor, an electromagnetic power transfer interface and with a (transmitting/receiving) antenna (multiple antenna, antenna array) in a far-field mode. The IC in a far-field mode can include a modulating/demodulating section, a central processing unit (CPU), a program memory, a working memory, a data memory, a power generating section, a voltage detecting section. The IC in a near-field mode (e.g. with a coupling coil) can include a resonance capacitor, a full-wave rectification circuit, a smoothing capacitor, a clock generation circuit, a constant voltage circuit, demodulation and modulation circuits, a power circuit, a digital circuit with a memory. The processor and the memory may be packaged into various package types. Various components may also be provided such as power management integrated circuits, sensors (e.g. accelerometers, gyroscopes, etc.), audio codecs, bluetooth controllers, etc. Various substrates may be used including flexible substrates and films. Magnetic sheets (e.g. ferrite or magneto-dielectric material sheets) may be provided to improve electromagnetic field radiation efficiency and to reduce eddy currents.

As used in the claims and the specification, the term "situated" shall also refer to attached, detachably attached, printed, posed, provided, etc., and the term "on said board" shall alsor refer "at about said board", "in a proximity or vicinity of said board", "in front of said board", etc., and shall also refer to said one or more chips disposed on said board in a defined pattern (e.g. an organising pattern, a game pattern, a track pattern, a road map or a sea route or an air route pattern).

As used in the claims and the specification, the term "coupled" includes direct coupling and indirect coupling via an intervening component [which can be functional, mechanical, electrical, electromagnetical, etc.]. The term shall refer to built in, attached, detachably attached, provided in, provided by, placed in, etc.

As used in the claims and the specification, the term "light generator" shall also refer to image generators, image processing circuits, video player circuits, displays, lights, lamps, light controlling circuits, etc.

As used in the claims and the specification, the term "image generator" shall preferably refer to image processing systems, circuits configured to process data obtained via the chip/reader. Such systems can include a Liquid Crystal Display (LCD), an Organic Light Emitting Diode (OLED) display, a display driving unit, etc.

As used in the claims and the specification, the term "sound generator" shall also refer to audio processing systems, circuits configured to process data obtained via the chip/reader. Such systems can include various loudspeakers, amplyfying circuits, audio player circuits, sound processors, transducers, etc.

As used in the claims and the specification, the term "layer" shall also refer to print, furniture, equipment, two dimensional layer, three dimensional layer, etc.

As used in the claims and the specification, the term "player" shall also refer to competitor, racer, contestant, etc.

As used in the claims and the specification, the term "radio frequency" as in radio frequency identification chip and radio frequency identification reader shall also refer to near field communication chips or readers, respective and both terms shall refer to active/passive tags.

Tags can provide functionality of readers and vice versa, i.e. chips and readers in the proposed system can be interchanged.

As used in the claims and the specification, the term "holder" shall refer to static/dynamic holders, shall refer to a rotatably mounted holder, to a holder comprising or coupled to a source of motion [e.g. an electric motor, etc.], shall refer to the holders to be held by users (directly or indirectly), shall refer to the holders to couple a chip/reader to anything else [e.g. a chip board, a product, a vehicle, a vessel, a construction, a natural structure, etc.].

The terms "print" and "holder" shall also refer to thematical prints and thematical holders.

As used in the claims and the specification, the term "electronic device" shall refer to desktop computers, workstations, notebook computers, laptops, tablet computers, handheld computers, smartphones, smartwatches, personal digital assistants, and the like.

As used in the claims and the specification, the term "processor" shall also refer to microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital), etc.

As used in the claims and the specification, the term "memory" shall also refer to read-only memory, random access memory, volatile memory, non-volatile memory, static memory, dynamic memory, flash memory, cache memory, and/or any device that stores digital information, etc.

As used in the claims and the specification, the terms "vehicle" and "offshore vessel" shall also refer to models and toys and vice versa. The term "vehicle" shall also refer to aerial vehicles, aircrafts, airplanes, helicopters, etc. Both terms shall refer to manned and unmanned vehicles and vessels, drones, etc.

As used in the specification, the term "a/b" shall refer to a and/or b.

The terms "to comprise", "to include", "to contain", "to provide" and derivatives specify the presence of an element, but do not preclude the presence or addition of one or more other elements or groups and combinations thereof.

The term "consisting of" characterises a Markush group which is by nature closed. Single members of the group are alternatively useable for the purpose of the invention. Therefore, a singular if used in the Markush group would indicate only one member of the group to be used.

For that reason are the countable members listed in the plural. That means together with qualifying language after the group "or combinations thereof that only one member of the Markush group can be chosen or any combination of the listed members in any numbers. In other words, although elements in the Markush groups may be described in the plural, the singular is contemplated as well. Furthermore, the phrase "at least one" preceding the Markush groups is to be interpreted that the group does not exclude one or more additional elements preceded by the phrase.

The invention will be described in reference to the accompanying drawings.

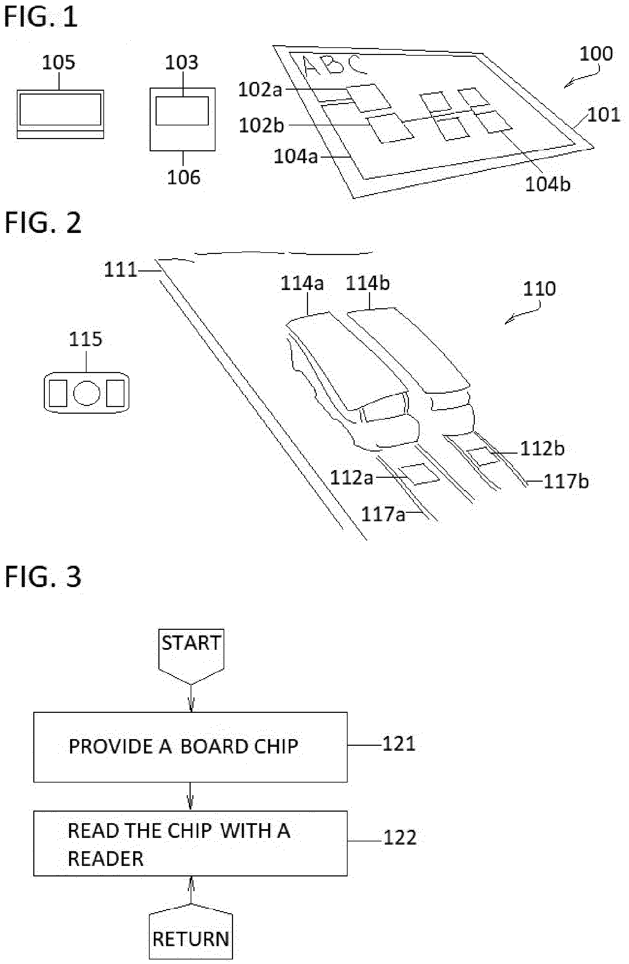

FIG. 1 is a schematic perspective illustration of a chip board system (100) which can comprise a board (101), two memory chips (102a, 102b) [which can be radio frequency identification chips] and a reader (103) [e.g. a radio frequency identification reader]. Each chip (102a, 102b) can be coupled with an antenna (104a) [which can be a dipole antenna or which can have a pattern of a conductive coils when frequency LF (Low Frequency) and HF (High Frequency) is used and which can be formed by printing, plating or etching, etc.] and (104b) [which can be a strip antenna (as shown) or a slot antenna (not shown) or a bowtie antenna (not shown), etc., when microwave band frequency is used and which can be formed by plating or etching, etc.] which can be thematically printed. The chip board (101) can be configured to be a game, an educational, instructinal, informational board. The chip board (101) can be wiredly and/or wirelessly coupled [e.g. directly using the provided antennas (104a, 104b) or via the reader (103)] with a personal computer (105) [which can be a desktop computer, a workstation, a notebook computer, a laptop, a tablet computer, a handheld computer, a smartphone, a personal digital assistant, a smartwatch, etc.]. The reader can be coupled with a thematical holder (106) [which can convene to the purpose of the chip board (101)].

FIG. 2 is a perspective illustration of a chip board system (110) which can comprise a chip board (111) with two memory chips (112a, 112b) and readers (not shown) coupled with a thematical holder which can be model trains (114a, 114b). The chip board (111) can be configured to be a game, i.e. can comprise tracks (117a, 117b) [which can be detachably attached] and can be thematically printed (not shown). The system (110) can further comprise an electronic device (115) [e.g. a game console] which can control the trains. The system (110) together with a train control system can provide with help of the memory chips (112a, 112b) real-time control, information on estimated departures/arrivals, etc.

FIG. 3 is a process flowchart of a chip board communication method comprising the steps of providing one or more board chips (121); reading said one or more board chips with provided one or more readers configured to communicate with at least one of said one or more chips (122), wherein the steps can be repeated and/or interchanged [e.g. one or more information boards may be provided during a sightseeing tour, one or more train stops can be provided on a track with different information, one or more game board squares (points) can be provided on a chip board game with various tasks, etc.].

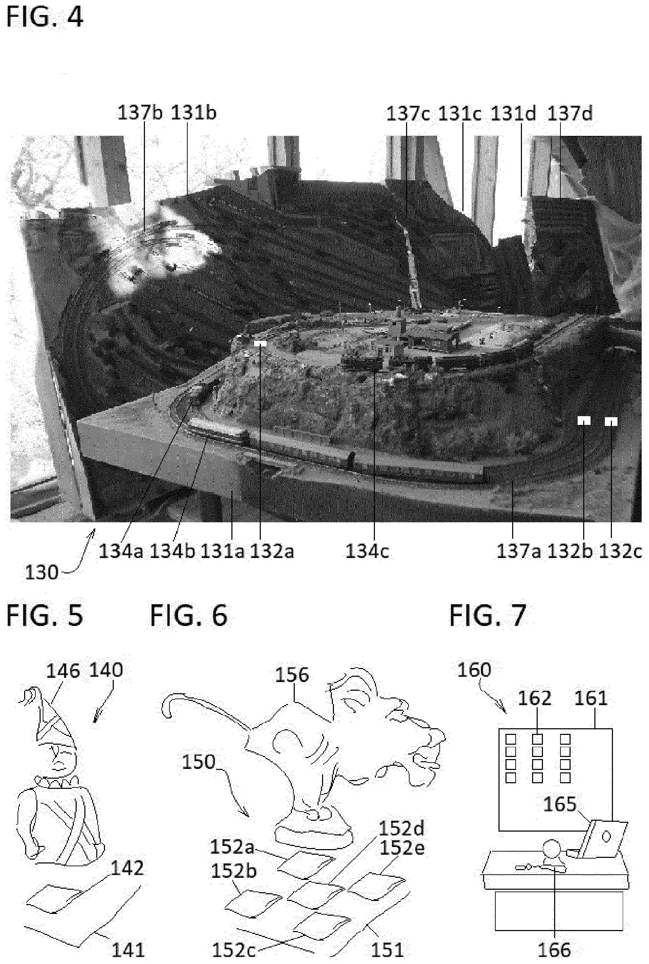

FIG. 4 is a perspective illustration of a chip board system (130) which can comprise modularly scalable and exchangeable three dimensional chip boards (131a, 131b, 131c, 131d) with memory chips (132a, 132b, 132c) (memory chips provided on the boards (131b, 131c, 131d) not shown) and readers (not shown) coupled with a thematical holder which can be model trains (134a, 134b, 134c). The chip board system (130) can comprise a modularly scallable and exchangeable track (137a, 137b, 137c, 137d). The system (130) can further comprise an electronic device (not shown) [e.g. controllable DC source with a processing unit] which can control the trains (134a, 134b, 134c). The application of the proposed system (130) for a real environment is contemplated as well.

FIG. 5 is a perspective illustration of a thematical holder (146) [which can be a figure, a doll, a circus performer, etc. and which can comprise a sound generator /e.g. an intelligent circuit including a memory, a processing unit, a controller, a loud speaker, etc.] which can contain a reader with an interface (not shown) [which can be provided from a bottom part and inside the figure (146)] and which can be provided in a chip board system (140) comprising a board (141) and a chip (142) situated on the board which can be configured to be an educational aid for subjects of education [e.g. children] (not shown). The board can be thematically printed [e.g. can represent a circus, a house, a garden, etc.]. A child can pose the figure (146) on a particular case containing the chip (142) and obtain an acoustic information, a portion of a fairy tale, a strophe of a song, etc.

FIG. 6 is a perspective illustration of another thematical holder (156) [which can be a chess figure, an animal figure, etc., and which can comprise a sound generator, etc.] which can contain a reader (not shown) and which can be provided in a chip board system (150) comprising a board (151) which can be composed from a plurality of squares [e.g.a chess board or another game board] and chips (152a, 152b, 152c, 152d) situated on the board. The board can be thematically printed [e.g. light and dark squares]. A player (not shown) can pose the figure (156) on a particular square containing the chip (152a, 152b, 152c, 152d) and obtain an acoustic information [e.g. concerning a position of the figure (156)].

FIG. 7 is a perspective illustration of another thematical holder (166) [which can be a hotel key holder, a tag, etc.] which can contain a reader [e.g. an RFID reader] and which can be provided in a chip board system (160) comprising a board (161) [which can be a three dimensional hotel room keys organiser] which can be composed of a plurality of boxes [e.g. for particular rooms] each comprising a chip (162) situated on the board (161) which can be thematically printed [e.g.with room numbers]. A hotel guest can collect and/or return a room key (card) attached to the holder (166) without a presence of a receptionist [or analogically for a flat user and a janitor] and an information can be sent to a processing device (165) [which can be a computing device checking the rooms or flats vacancy, etc.].

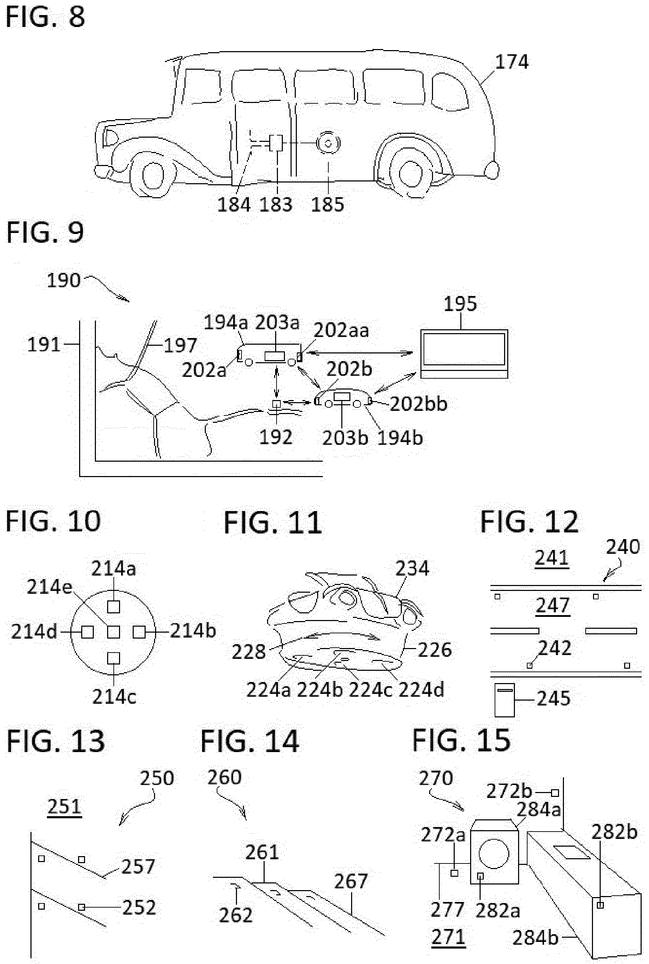

FIG. 8 is a side view illustration of a vehicle model (174) [which can be a coach model, a vintage car model, etc.] which can contain a reader (183) [which can be integrated in one chip] electrically connected to an antenna system (184) [which can include a shunt to faciliate impedance matching] and coupled with a sound generator (185). The vehicle model (174) can be used in a chip board system [e.g. as shown in FIG. 9].

FIG. 9 is a schematic partial plan view of a chip board system (190) which can be a chip board game and which can comprise a chip board (191) which can be thematically printed [e.g. can represent a road map containing towns, service stations, charging stations, points of interest, etc.]. The game can consist in two players travelling on a track pattern (197) [which can be a printed roadway network] on the map among stops including one or more chips (192) using readers (203a, 203b) coupled with vehicles which can be a coach model (194a), a car model (194b), a train model, etc. The system (190) can further comprise chips (202a, 202aa, 202b, 202bb) configurated to RF-communicate with the readers (203a, 203b) [each chip (202a, 202aa, 202b, 202bb) can communicate with each reader (203a, 203b) /communication is shown in a simplified way/]. The system can further comprise an electronic device (195) [e.g. a computer with a monitor] by means of which players can set preferences and which can control the game, communicate tasks, instructions, information, etc., depending on which memory chip is read by a specific chip reader which can provide information wiredly or wirelessly to the electronic device controlling the game. Similarly the game can concern off shore routes with offshore vessels travelling between ports, etc.

FIG. 10 is a schematic of a multi-antenna of a reader which can be configured to emite, receive, transceive [e.g. can be coupled with a transmitter, receiver, transmitter which can be provided as an integrated circuit (IC)] electromagnetical radiation fields and can comprise five antennas (214a, 214b, 214c, 214d) [which can be wideband microwave antennas capable of radiating over different angular fields] which can be provided in a central position [e.g. providing an omni-directional monopole antenna], and peripheral positions [e.g. providing sectoral horn antennas]. Other antenna types can be used [dipole antennas, crossed dipole antennas, super wideband directional vivaldi antennas, parabolic antennas, antenna arrays supporting beamforming and/or polarization /e.g. circular or hopping polarization/, etc.].

FIG. 11 is a perspective illustration of a multiple-antenna of a reader which can be configured for RF-communication and can comprise four peripheral antennas (224a, 224b, 224c, 224d) which can be provided in a defined pattern and which can be coupled with a holder (226) rotatably mounted to a vehicle (234) [which can be a model vehicle, an electric vehicle, an internal combustion engine (ICE) powered vehicle, an autonomous vehicle, a robot, a drone, etc.]. The holder (226) can be powered by an electric motor and can oscillate in a shown direction (228) to "test the terrain" or to turn the vehicle (234) in case of a model vehicle. The "terrain" can be represented by a chip board (not shown) which can comprise a track pattern (not shown) [e.g. in case of a game board, such a board can comprise a negative dimple to slide in the holder which can turn the model vehicle (234) right way to another point on the track depending on the correct answer of a player, his option, etc.; in case of a real environment the board can be a house floor or a road, a sidewalk, a highway, etc., and similarly the oscillating holder (226) can show the right way for the vehicle (234), e.g. depending on electromagnetic field strength, direction, pattern, etc.]. The shown embodiment can be used for offshore applications in a model scale or in the real environment similarly. The rotating holder system can be used for other game embodiments, e.g. as shown in FIGs. 5 and 6.

FIG. 12 is a schematic partial plan view of a chip board system (240) which can be a roadway system and which can comprise a three dimensional chip board (241) which can be a real environment [which can contain towns, service stations, charging stations, points of interest, etc.]. The system (240) can comprise a track pattern (247) [e.g. a roadway network which can include a roadway (carriageway), barriers, shoulders, etc.] coupled to the real environment (241) comprising memory chips (242) situated on the track pattern (247). The system (241) can use readers (not shown) coupled with vehicles such as coaches, trains, cars, etc. The system (240) can further comprise one or more electronic devices (245) [e.g. a roadway system computer/controller, an onboard computer/controller, etc.] by means of which users of the system (240) [i.e. mainly drivers of the vehicles] can set preferences, communicate with the roadway system computer/controllers, onboard computer/controllers and which can control the traffic, communicate tasks, instructions, information, etc., depending on which memory chip is read by a specific chip reader which can provide information wiredly or wirelessly to the electronic device controlling the traffic. Similarly the system (240) can concern offshore waterways with offshore vessels travelling between ports, etc.

FIG. 13 is a partial plan view of a chip board system (250) which can be a parking system and which can comprise a chip board (251) which can be a parking and memory chips (252) situated on the parking (251). The system (250) can comprise a pattern (257) [e.g. a parking marking lines]. The system (251) can use readers (not shown) coupled with vehicles such as autonomous (electric) vehicles. The system (250) can further comprise one or more electronic devices (not shown) [e.g. a parking system computer/controller, an onboard computer/controller, etc.] by means of which users of the system (250) [i.e. mainly drivers of the vehicles] can set parking preferences, communicate with the parking system computer/controllers, onboard computer/controllers and which can control the traffic, communicate tasks, instructions, information, etc., depending on which memory chip is read by a specific chip reader which can provide information wiredly or wirelessly to the electronic device controlling the traffic. Similarly the system (250) can represent offshore berths, ports and harbors with offshore (autonomous) vessels sailing/anchoring in ports, etc.

FIG. 14 is a partial perspective view of a chip board system (260) which can be a building communication system and which can comprise a three dimensional chip board (261) which can be a staircase and memory chips (262) situated on the staircase (261). The system (260) can comprise a pattern (267) [e.g. a staircase plan]. The system (261) can use readers (not shown) coupled with vehicles such as autonomous home robots, hospital robots, works robots, etc. The system (260) can further comprise one or more electronic devices (not shown) [e.g. a building system computer/controller, a robot computer/controller, etc.] by means of which users of the system (260) [i.e. house residents, patients and staff in the hospital, workers, etc.] can set robot relocation preferences, communicate with the concerned system computer/controllers, robot computer/controllers and which can control the robot movement, communicate tasks, instructions, information, etc., depending on which memory chip is read by a specific chip reader which can provide information wiredly or wirelessly to the electronic device controlling the robot's activity.

FIG. 15 is a partial perspective view of a chip board system (270) which can be a home communication system and which can comprise a three dimensional chip board (271) which can be a kitchen [or another room] and memory chips (272a, 272b) situated in the kitchen (271) and memory chips (282a, 282b) situated on products (284a, 284b) [which can be a washing machine and a sink unit, etc.]. The system (270) can comprise a pattern (277) [e.g. a home plan]. The system (270) can use readers (not shown) coupled with vehicles such as autonomous home robots, personal care robots, etc. The system (270) can further comprise one or more electronic devices (not shown) [e.g. a smart home system computer/controller, etc.] by means of which users of the system (270) [i.e. house residents, etc.] can set robot relocation preferences, communicate with the concerned system computer/controllers, robot computer/controllers and which can control the robot movement, communicate tasks, instructions, information, etc., depending on which memory chip is read by a specific chip reader which can provide information wiredly or wirelessly to the electronic device controlling the home robot's activity.

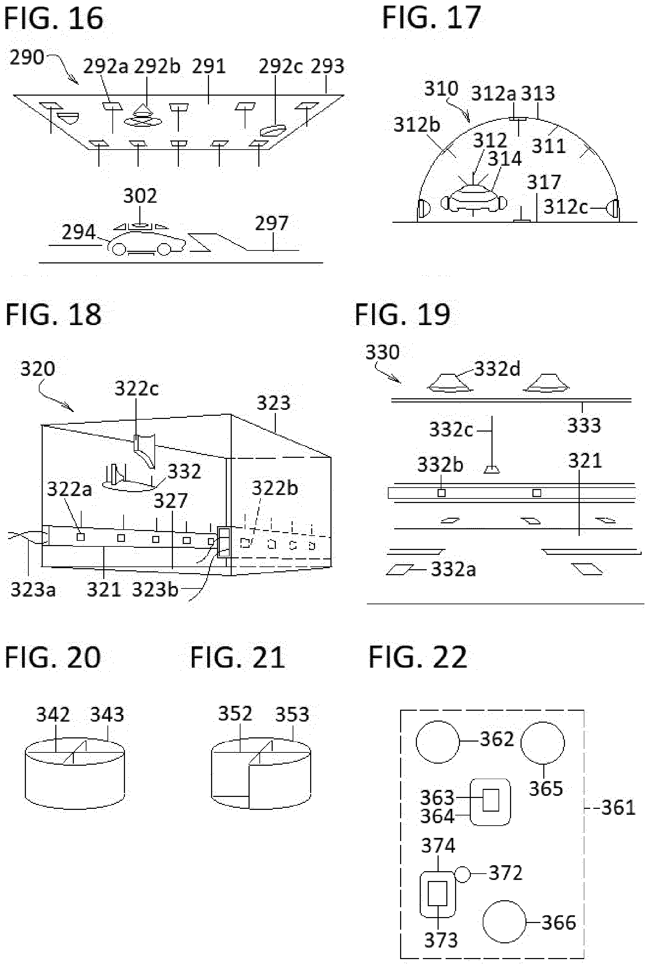

FIG. 16 is a partial perspective view of a chip board system (290) which can comprise a three dimensional chip board (291) which can be installed upside down under a construction (293) [which can be a ceiling, a bridge, etc.] and thus obtruing Global Positioning Satellite (GPS) navigation signals or Low Earth Orbit (LEO) satellite signals or Global System for Mobile Communication (GSM) signals, etc. The system (290) can comprise position memory chips (292a) [which can provide monopole antennas], (292b) [which can provide a broadband dual-polarized omni-directional antenna], (292c) [which can include a directional horn antenna].

GPS satellites travel in their orbits and send L1, L2, L5 signals with frequency of 1575.42 MHz, 1227.6 MHz and 1176 MHz, respectively. A GPS receiver can receive signals from at least four satellites and solves navigation equations to show position. LEO satellites use 1.525 MHz and 1.9 MHz frequencies. A LEO receiver can obtain satellite parameters for one or more LEO satellites and establish altitude. In the present invention any type of antenna can be used in combinations, arrays, etc. Multiple transmitting antennas and multiple receiving antennas (MIMO) technology can be used as well as traditional Single-Input-Single-Output (SISO) antenna system. Monopolarized antennas (vertically, horizontally, slant polarized), dual-polarized antennas may be used, omni-directional antennas and directional antennas may be used. Active RFID tags usually use frequency 433 MHz, passive RFID tags may use frequency 860-960 MHz. Horn antennas usually use frequency 1GHz to 206 GHz.

The system (290) can comprise a track pattern (297) [e.g. a road plan]. The system (290) can use readers (not shown) coupled with a vehicle (294) such as autonomous vehicles, models, toys, etc. which can provide a multi-antenna array (302) configured to correspond to the antennas of the chips (292a, 292b, 292c) and which can be optionally rotatably mounted.

The system (290) can further comprise a complete navigation system wherein the RF antennas can be coupled to a navigation radio reader downconverting and digitizing the RF signals to produce one or more basebands or digital intermadiate frequency (IF) signals; a digital processor can further determine navigation radio position using programming instructions stored in a memory. Data from sensors can be combined in the navigation radio reader, e.g. an inertial sensor, magnetometer, altimeter, steering control unit, traction control unit, odometer, speedometer, optical cross-correlation camera, motion sensors, etc.

FIG. 17 is a frontal view of a chip board system (310) which can comprise a three dimensional chip board (311) which can be installed under a signal obtruing construction (313) [e.g. a tunnel, etc.] and position memory chips (312a) [which can provide monopole antennas which can be vertially polarized], (312b) [which can provide a ±45° slant polarized antennas], (312c) [which can include a horizontally polarized antenna which can include various, e.g. conical, spherical, etc. components and a vertically polarized antenna which can include crossed dipoles]. The system (310) can comprise a track pattern (317) [e.g. a roadway]. The system (310) can use readers (not shown) coupled with a vehicle (314) which can provide an antenna module (312) [fixed, attached, detachably attached, rotatably mounted, etc. to the vehicle (314)] configured to correspond to the antennas of the chips (312a, 312b, 312c).

FIG. 18 is a perspective illustration of a chip board system (320) which can comprise a chip board (321) [which can be coupled with road barriers and a ceiling] which can be installed under a signal obtruing construction (323) [e.g. concrete panelled, etc.] and position memory chips (322a, 322b) [which can have power and/or communication connections (323a, 323b) e.g. with a local or central controller which can collect vehicle data and provide vertically polarized antennas], (322c) [which can include a horn antenna of various types and shapes or another (highly) directional antenna]. The system (320) can comprise a track pattern (327) [e.g. a roadway plus road margins, sidewalks, etc.]. The system (320) can use readers (not shown) coupled with a vehicle (not shown) which can provide a compatible antenna module (332) [monopole antenna shown, crossed dipole (plannar) antennas which can be provided on a printed circuit board (PCB) by known techniques are contemplated as well]. The module which can include a transmitter comprising a protocol processing module, an encoding module, (an adjust power module, a power controller, a synthetiser, a local oscillation generator (LO GEN), a (linear/nonlinear) power amplifier), a digital to analog converter (DAC) coupled with a RF front-end; and a receiver including the protocol processing module, a decoding module, a digitalization module and can be coupled to the front end which can include a near-field module including a power amplifier a compensation and a coil, capacitor or electromagnetic near-field interface and a far-field moudule including a power amplifier, a low noise amplifier and antennas in a dual mode configuration (others are possible). The processor with memory can in according to a defined algorithm compare antennas's RF signals eventually together with signals from sensors (e.g. proximity sensors, speed and motion sensors, centrifugal force sensors, positional /"flywheel"/ sensors, etc.) and signals from GPS, LEO, etc. antennas to obtain greager navigational accuracy.

FIG. 19 is a perspective illustration of a chip board system (330) which can comprise a three dimensional chip board (321) [coupled with a carriageway, road barriers, surrounding countryside] which can be installed under a satellite signal obtruing construction (333) [e.g. a concrete ceiling of a covered parking, etc.] and position memory chips (322a) [which can be preferably passive and provide vertically polarized antennas], (322b) [which can be preferably passive and provide dual polarized antennas], (322c) [which can be preferably active roadside vertically polarized antenna beacons situated in a surrounding countryside in a defined pattern], (332d) [which can preferably be highly directional vertically polarized antennas]. The system (320) can comprise the defined track pattern (327) [e.g. including a roadway plus road margins, sidewalks, surroundings, overhead constructions, etc.]. The system (320) can use readers (not shown) coupled with a vehicle (not shown) which can provide a compatible antenna module(s) (e.g. similarly as shown in FIG. 18).

FIG. 20 is a schematic perspective view of a crossed dipole antenna (342) with a substrate (343) to improve a directionality. The substrate may be a metal substrate or a substrate with a metal layer such as a copper or an iron layer or preferably aluminium. Other types of antennas can be used with various types of substrates to provide a convenient directionality to the particular system.

FIG. 21 is a schematic perspective view of another crossed dipole antenna (352) with a different substrate (353) [other antennas with different directivities, shapes, forms and parameters can be used in the proposed system].

FIG. 22 is a schematic of a chip board navigation method comprising the steps of providing a board chip (362) in a defined pattern and providing a reader (363) configured to communicate with at least the board chip (362) and coupled to an at least partially autonomous vehicle/offshore vessel (364). The reader (363) can be configured to communicate with a sensor (365) and with a GPS and/or LEO (or another communication) satellite (366). The next step can be determining a board parameter by the reader (363), wherein at least one said board parameter can be selected from the group consisting of electric fields parameters, magnetic fields parameters, time messages transit times, sensors output values, or combinations thereof. The reader (363) can be configured to emite/receive/measure/compute electrical fields, e.g. can comprise (resonant) capacitive interfaces, emitting/receiving/measuring circuitry and processing units computing electric field parameters according to pre-recoreded logarithms, similarly for magnetical fields, electromagnetical fields, sensors (mainly acoustical, optical), similarly the reader (363) can use time messages from GPS satellites to determine the transit time of each message containing the time the message was transimitted and the satellite position at the time of message transmission and to compute the distance to each satellite using the velocity of light. The next step can be defining a navigation parameter selected from position, velocity, acceleration, deceleration, direction of motion, orientation, distance from any of said one or more board chips, distance from the communication satellite (366), distance from the sensor (365), or combinations. The reader (363) can combine calculations of distance using various navigation equations for all observations (board parameters). A chip board (361) can be 2D, 3D, model board, game board, educational board or the real environment comprising at least one board chip. The reader (363) can comprise a processor and memory including 2D/3D maps providing real time position information on the board chips, sensors and/or targets, satellites, etc. Live satellite maps updates via the Internet, central or local servers can be contemplated.

The chip board (361) in the proposed method can further comprise a chip (372) configured to communicate with the reader (363) and coupled to another autonomous vehicle/offshore vessel (374) which can comprise another communicating reader (373), the communication can include time and distance paremeters as well.

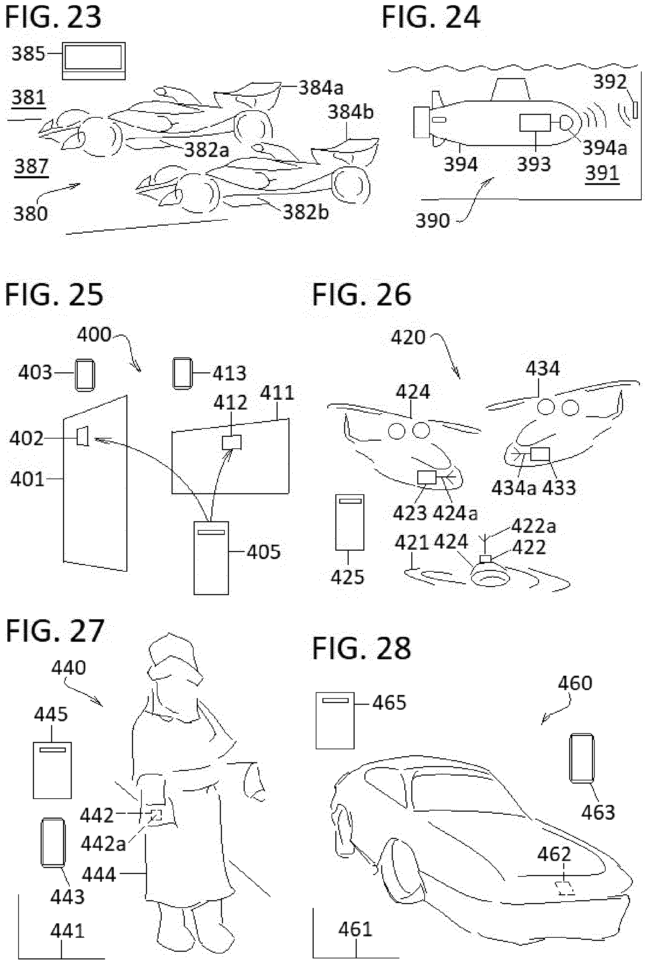

FIG. 23 is a perspective illustration of a chip board system (380) which can comprise a chip board (381) [which can be a racing circuit area] with two memory chips (382a, 382b) [which can be coupled with any type of a signal interface, e.g. a coil, a capacitor, an RF-antenna, a light generator, a sound generator] and readers (not shown) [which can be coupled with highly directive antenna to provide a precise position information] coupled with (model) racing cars (384a, 384b). The chip board (381) can be configured to provide a game (or a real racing opportunity), i.e. can comprise a track (387) [which can be detachably attached] and can be thematically layered (not shown) [e.g. printed, provided with the racing equipment, pit stops, fuel stations, service stations, etc.]. The system (380) can further comprise an electronic device (385) [e.g. a laptop computer] which can control the cars [e.g. can send information to the chips (382a, 382b) which can automatically start the cars (384a, 384b) or can measure starting/arriving time, each lap time, etc.]. The proposed readers can be active systems in contrast with passive transponders.

FIG. 24 is a schematic elevation view of a three dimensional chip board underwater system (390) which can comprise a three dimensional chip board (391) [which can be a tank, a pool, an undersea environment, etc.] and a memory chip (392) situated in the underwater environment (391) or on products [e.g. on an artificial or natural obstacle, landmark, underwater drone, submarine, military equipment, underwater charging station, etc.]. The system (390) can comprise a pattern (not shown) [e.g. a plan of offshore charging stations with attached chips, etc.]. The system (390) can use readers (393) coupled with offshore vessels (394) [such as autonomous drones, submarines, autonomous underwater vehicles, models, toys, etc.]. The system (390) can further comprise one or more electronic devices (not shown) [e.g. central/local computer/controller, etc., wherein the system can provide peer-to-peer communication, cloud/fog/edge communication, network-centric warfare (NCW) communication, scientific network communication, etc.] by means of which users of the system (not shown) [i.e. civil or military users, players, etc.] can set vessel's relocation preferences, can communicate with the system, etc. Computer/controllers, robot computer/controllers can control the vessel's (394) movement, communicate tasks, instructions, information, etc., depending on memory chip information read by the chip reader (393) which can provide information wiredly or wirelessly to the computer/controller which can communicate with an user via any communication interface [e.g. a touchscreen, etc.] or to any communication node of the particular system. From a military point of view the system can bring important benefits in active underwater memory chips (392) coupled with transducer [or a coil, an antenna, a loudspeaker, etc.] and sending time messages and position information into the underwater environment in defined time periods. A submarine (394) can decide whether it will answer, e.g. by emitting ultrasound waves, i.e. become "visible" (even for an enemy) in the undersea environment (391) or it will be only "listening". And on the other hand, the system (390) controlling the underwater memory chip (392) can make decision whether the underwater memory chip (392) will answer the submarine (394) and thus becomes "visible" or not. Thus a two-way control can be provided. Submarines can use naval frequencies in VLF, LF, MF, HF, VHF, UHF ranges, they can use voice and teleprinter modulations, they can use acoustic speakers pointed upward to the surface, while surfaced they can use radio communication with over water positioned board chips (not shown). The reader (393) can comprise a power supply, a transmiter/receiver, a beamforming processor and a transducer (array) (394a) and/or an RF antenna and/or a coil or another interface.

FIG. 25 is a schematic perspective illustration of an educational/instructional aid chip board system. (400) which can be composed of two (or more) chip boards (401, 411) which can be thematically printed [e.g. can represent an information panel, a specific design of a restaurant chain, etc.]. The boards (401, 411) can comprise board chips (402, 412) [which can be attached, detachably attached, glued, incorporated, etc.] which can include a microprocessor with a memory and a communication interface [the chips (402, 412) can provide information on a sigthseeing tour, a restaurant chain menu, an electric vehicle/vessel charging station rate, parking vacancies, hotel vacancies, etc.]. Subjects of education/instruction (not shown) [e.g. clients, hotel guests, drivers, etc.] can use readers (403, 413) [e.g. smartphones, tablets, in-vehicle computers, etc.] comprising compatible communicating interfaces [e.g. a telephone technique antenna, an RFID antenna, a coil, etc.] and read the chips (402, 412) to obtain an information. They can actively communicate with the chip to make a reservation, to pay for dinner, the parking, etc. The chips (402, 412) can communicate with a local, central, Internet controller [e.g. via an app communication] or using peer-to-peer, cloud/fog/edge communication, etc. The chips can communicate with another chip (not shown) coupled with a product [e.g. a remote control gate] and send an instruction to the product [e.g. to open the gate]. A controller (405) can selectively send educational information or an instruction [e.g. leave a parking, leave a hotel, check-in, check-out, concerning price update, vacancies update, etc.] to a preselected chip board (401, 411) and the corresponding chip (402, 412). The chip boards (401, 402) with respective chips (411, 412) can be coupled with a communication interface [e.g. a liquid crystal display] to provide the information and they can both represent an educational/instructional module.

FIG. 26 is a schematic perspective illustration of an offshore detection and rescue aid chip board system (420) which can be composed of a chip board (421) which can be an offshore water level [e.g. a sea surface] which can comprise a board chip (422) which can be situated afloat and which can include a microprocessor with a memory and an antenna (422a) [e.g. a global positioning system (GPS) antenna, a marine dual antenna, etc.] and which can be passive or active including its own power source (not shown). The chip (422) can be coupled [e.g. detachably attached, incorporated, etc.] with a product (424) [which can be a lifeboat, a black box, a part of a ship, etc.]. The chip (422) can RF-communicate with a central controller (425) [e.g. an ocean rescue system operator]. The system (420) can comprise one or more readers (423, 433) which can comprise or be coupled with compatible antennas (424a, 434a) and with vehicles (424, 434) [which can be provided in the marine detection and rescue system and which can be helicopters (as shown), drones, water vessels, etc.]. The helicopters (424, 434) can wirelessly communicate with the chip (422), peer-to-peer and with the central controller (425) [and/or with other communication nodes in the system]. The board chip (422) can be a detection/rescue module. The chip board system (420) can be provided as a model, a toy, a game system.

FIG. 27 is a schematic perspective illustration of a personal supervision, detection and rescue aid chip board system (440) which can be composed of a chip board (441) [which can be the real environment wich may be limited by the expected occurence of the child and which can comprise board tracks, i.e. a route wher the child will go during a day, a stay, etc.] which can comprise a board chip (442) which can include a microprocessor with a memory and an antenna (442a) [e.g. a global positioning system (GPS) antenna, a GSM modem with an antenna, etc.] and which can be passive or active. The chip (442) can be coupled [e.g. detachably attached, concealed, etc.] with a product (444) [which can be a kids' clothing, etc.]. The chip (422) can RF-communicate with a central controller (445) via the GSM modem and antenna, with a reader (443) [which can be provided in a smartphone, and which can be provided to users of the sysem, e.g. police services, child guardians, parents, etc.]. The chip board system (440) can provide children supervision, tracking, etc. The chip (442) can be a memory chip and can record preprogrammed events [e.g. can comprise a GPS antenna and recording system, a microphone, a camera, etc.]. The chip (442) can actively, e.g. via the telephone modem call a preprogrammed authorities number in case of an event [e.g. detected jamming, lost of a GPS signal, the system can compute a child's location in preprogrammed intervals and can call the autorithies in case of an inadequate child's location, etc.]. The chip (442) can be activated/desactivated by the guardians, parents, etc.

FIG. 28 is a schematic perspective illustration of a car detection and rescue aid chip board system (460) which can be composed of a chip board (461) [which can be the real environment] which can comprise a board chip (462) which can be coupled [e.g. concealed, etc.] with a product (464) [which can be a (model) car to be radio identified]. The chip (462) can RF-communicate with a central controller (465) and with a reader (463) [which can be provided in a smartphone, and which can be provided to police services, car rental agencies, etc.]. The chip board system (460) can provide car identification and tracking, etc. The chip (462) can be a memory chip and can record preprogrammed events [e.g. can comprise a GPS antenna and recording system, a microphone, a camera, etc.]. The chip (462) can actively e.g. via the telephone modem call a preprogrammed authorities number in case of an event [e.g. detected jamming, lost of a GPS signal, the system can compute a car's location in preprogrammed intervals and can call the autorithies in case of an inadequate car's location, etc.]. The chip (462) can be activated/desactivated by car rental service staff, etc.

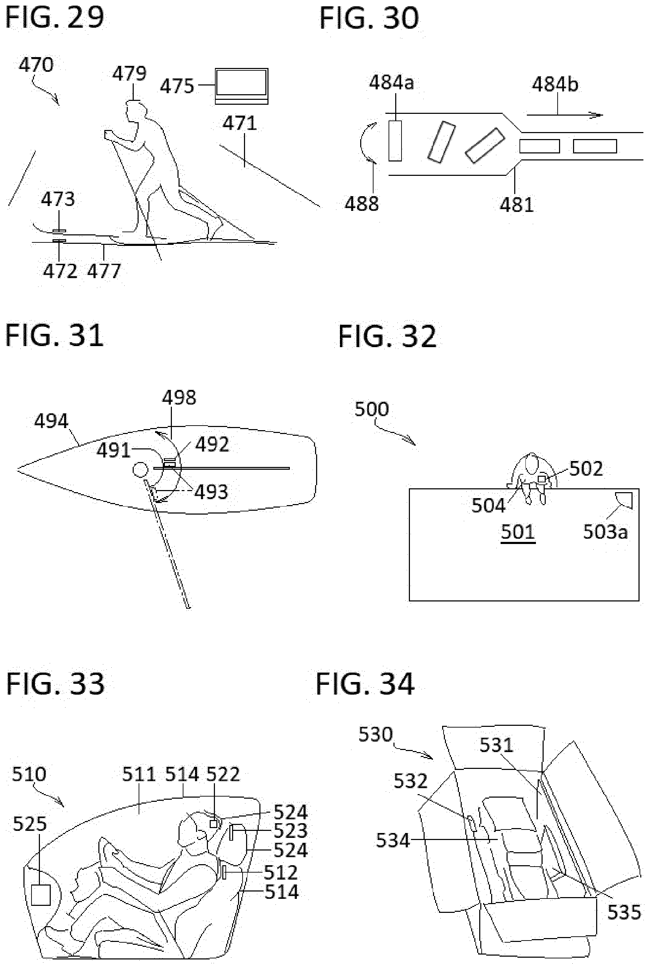

FIG. 29 is a perspective illustration of a chip board system (470) which can comprise a chip board (471) [which can be a nordic skiing center, etc.] with a memory chip (472) [which can be coupled with a track] and readers (473) which can be coupled with a piece of sport equiment [a ski, a shoe, etc.]. The chip board (471) can be configured to provide a game, e.g. a real racing opportunity, i.e. can comprise a track (477) [which can be temporarily traced] and can be thematically layered (not shown) [e.g. provided with the racing equipment, stops, service stations, etc.]. The system (470) can further comprise an electronic device (475) [e.g. a computing center] which can control users (479) [e.g. competitors] can send instruction to the chip (472) which can automatically register or measure starting/arriving time, lap times, etc.]. The proposed chips and readers can use RFID or NFC techniques wherein the devices can act as a reader and as a tag, the positions of which can be interchanged in the system (470).

FIG. 30 is a partial schematic plan view of a chip board navigation method compiring the step of providing a board chip in a defined pattern (481) [e.g. a track to follow pattern] which can be coupled with a directional antenna providing a highly directional electromagnetic field (481) [e.g. in a navigable track or water way direction] and providing a reader coupled with a directional antenna (484a) [shown in several time and place successive phases] which can be provided in a rotatably mounted module which can rotate or oscillate in shown direction (488) to determine an electromagnetic field pattern [e.g. its strength and direction] and to define a navigation parameter of a coupled vehicle/vessel (not shown) [e.g. exact position, direction of motion (484b), etc.] accordingly to the electromagnetic field pattern (481).

FIG. 31 is a partial schematic plan view of an offshore chip board navigation method comprising the step of providing one or more board chips (492) in a defined pattern (491) [e.g. an onboard defined halfcircle around a mast as shown or in bow, stem, starboard, port side positions, etc.] which can be coupled with a directional antenna providing highly directional electromagnetic field positions [e.g. boom trimming positions] and providing a reader (493) coupled with a directional antenna [which can be coupled with any part of a sail, with a boom, with a sheet, etc.] which can be provided in a rotatably mounted module which can rotate or oscillate in shown direction (498) to determine an electromagnetic field strengts [e.g. its strength and direction] and to define a navigation parameter of a coupled vessel (494) [e.g. a (model) sailing boat]. The board chips (492) and reader (493) positions can be interchanged.

FIG. 32 is a schematic plan view of a personal detection and rescue chip board system (500) which can be composed of a chip board (501) [which can be a model or real environment wich may be limited by the expected occurence of a toy or a child, e.g. a swimming pool] which can comprise a board chip (502) which can include a microprocessor with a memory and an antenna and which can be coupled [e.g. detachably attached] with a product (504) [e.g. a kids bathing suit, etc.]. The chip (502) can RF-communicate with a with a reader (not shown) [which can be coupled with a directional antenna (503a) and positionned to supervise the swimming pool (surface), etc.]. The chip board system (500) can provide children supervision, tracking, etc. [e.g. trigger an alarm].

FIG. 33 is a schematic perspective illustration of a personal supervision and detection aid chip board system (510) which can be composed of a chip board (511) [which can be a three dimensional interior of a (model) vehicle (514)] which can comprise a board chip (512) which can include a microprocessor with a memory and an antenna and which can be coupled [e.g. detachably attached] with a product (514) [e.g. a car seat, etc.]. The chip (512) can RF-communicate with a with a reader (not shown) [which can be smartphone]. The chip board system (510) can provide car supervision, tracking, etc. [e.g. trigger an alarm in case a person trying to start the car is not identified by means of the smartphone, etc.]. Optionally another chip (522) can be attached with a product (524) [e.g. a driver's cap] and another reader (523) can be coupled with a head support (524). The chip (522) can communicate with the reader (523) which can communicate with a vehicle processing unit (525). The system (510) can provide head position tracking by means of directional antennas, coils, capacitors or other energy transfer interfaces and can trigger an alarm, or turn on an autopilot, or activate an emergency mode slowing down the vehicle (514) in case of a change of the head position, etc. The smartphone can communicate with the unit (525) as well.

FIG. 34 is a perspective illustration of a chip board system (530) which can comprise a modularly scalable and exchangeable chip board (531) [or other component of the system] which can include a track (not shown) with memory chips (532) [which can be detachably attachable to the board (531)] and a reader (not shown) coupled with a thematical holder which can be a model car (534). The chip board system (530) can comprise a modularly scallable and exchangeable board track [e.g. additional kits can be pruchased]. The system (530) can further comprise an electronic device (535) [e.g. a controlling tablet with a game software] which can control/communicate with the car (534) via the reader and with the chips (532) directly or via the reader.

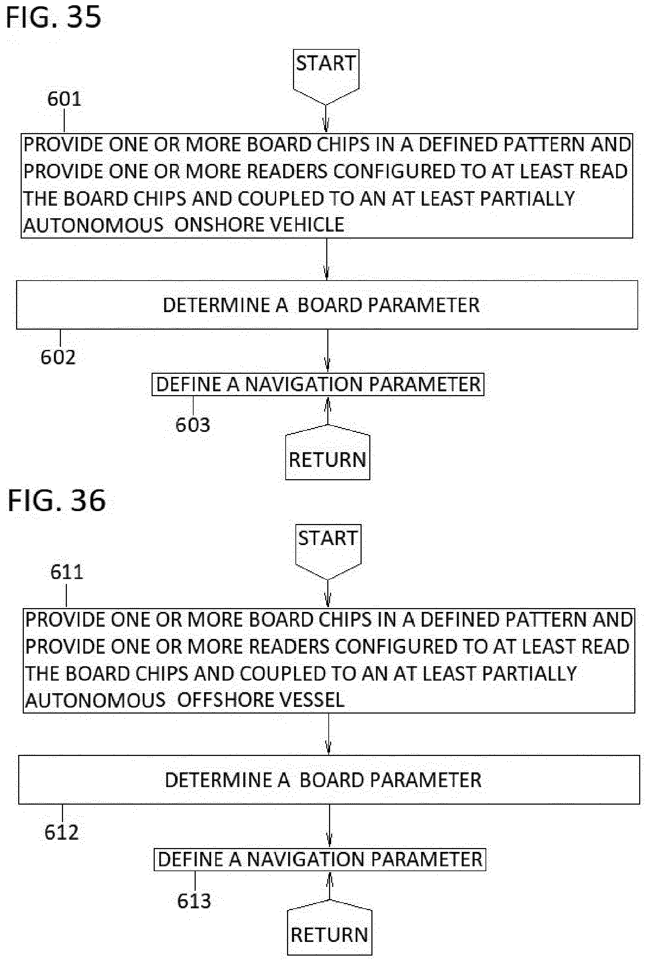

FIG. 35 is a process flowchart of a chip board onshore navigation method comprising the steps of providing one or more board chips in a defined pattern [which can be provided on onshore installations, systems, constructions, etc.] and providing one or more readers configured to communicate with at least one of said one or more board chips and coupled with an at least partially autonomous vehicle (601); determining a board parameter by the reader, the parameter selected from electric fields parameters, magnetic fields parameters, time messages transit times, sensors output values, topographic maps values, celestial objects values or combinations (602); defining a navigation parameter selected from position data, velocity data, acceleration data, deceleration data, direction of motion data, orientation data, azimuth data, altitude data, wind direction data, wind speed data, distances from any of said one or more board chips, distances from communication satellites, distances from sensors, distances from targets, distances from natural objects, distances from artificial objects or combinations (603) wherein the steps can be repeated/interchanged [e.g. a number of measurements can be taken to determine a course of the autonomous vehicle, to activate its braking, accelerating, etc. systems, to provide control instructions to one or more control modules of the vehicle, to navigate the vehicle along a determined course, to communicate the data to an information pannel of the vehicle, to combine the obtained data with other vehicle's sensors and sensing circuits /e.g. proximity sensors, optical sensors, echolocation sensors, rechargeaeable power source state sensors, driving unit sensors, HVAC sensors (Heating, Ventilation, Air Conditioning), ambient temperature sensors, interior temperature sensors, throttle position sensors, wind speed/direction sensors, compass sensors, information displays may be provided, etc.].

FIG. 36 is a process flowchart of a chip board offshore navigation method comprising the steps of providing one or more board chips in a defined pattern [which can be provided on underwater or overwater installations, systems, constructions, etc.] and providing one or more readers configured to communicate with at least one of said one or more board chips and coupled with an at least partially autonomous offshore vessel (611); determining a board parameter by the reader, the parameter selected from electric fields parameters, magnetic fields parameters, time messages transit times, sensors output values, topographic maps values, celestial objects values or combinations (612); defining a navigation parameter selected from position data, velocity data, acceleration data, deceleration data, direction of motion data, orientation data, azimuth data, water depth data, water currents direction data, water currents speed data, air temperature data, water temperature data, water background shapes, water cycles, wind direction data, wind speed data, distances from any of said one or more board chips, distances from communication satellites, distances from sensors, distances from targets, distances from natural objects, distances from artificial objects or combinations (613) wherein the steps can be repeated/interchanged [e.g. a number of measurements can be taken to e.g. determine a course of the autonomous offshore vessel, to activate its braking, accelerating, etc. systems, to provide control instructions to one or more control modules of the offshore vessel, to navigate the offshore vessel along a determined course, to communicate the data to an information pannel of the offshore vessel, to combine the obtained data with other vessel's sensors and sensing circuits /e.g. proximity sensors, optical sensors, echolocation sensors, rechargeaeable power source state sensors, driving unit sensors, HVAC sensors (Heating, Ventilation, Air Conditioning), ambient temperature sensors, interior temperature sensors, throttle position sensors, wind/water currents speed/direction sensors, compass sensors, sailing rig sensors, information displays may be provided, etc.].

No limitations are intended others than as described in the claims. The present invention is not limited to the described exemplary embodiments. It should be noted that various modifications of the proposed system can be made without departing from the scope of the invention as defined by the claims.

Elements, integers or components having known equivalents thereof are herein incorporated as if individually set forth.

The elements, integers, components, materials, techniques, etc., desribed in this specification reflect the state of knowledge at the time of the filling of this application and may be developed in the future.

### Industrial Applicability

The present invention can be useful for educational, instructional, informational aid and game purposes. It can be used in the educational system, the administration, tourism, the game and model industry. It can provide wider communication and information possibilities.

The system proposes personal settings and options.

The navigation feature of the proposed system can enable to reach more sophisticated board games. The principles of the invention appplied to scaled two- or three dimensional chip boards can be easily transferred to the real three dimensional environment.

The proposed chip board navigation system, especially when combining various antennas types, e.g. monopolarized, dual-polarized, omni-directional and (highly) directional antennas, can provide a comprehensive system especially when realised under jamming or signal obstruction (e.g. buildings, in tunnels, etc.) for satellite navigation systems.

The proposed chip board system in the real environment can provide supervision and tracking.

## Claims

1. A chip board system for one or more users, **characterised in that** it comprises: a board; one or more chips situated on said board; one or more readers configured to communicate with said one or more chips.

2. The chip board system according to claim 1, wherein at least one of said one or more chips is a memory chip.

3. The chip board system according to claim 1, wherein at least one of said one or more chips and/or at least one of said one or more readers comprise or are coupled with an interface, wherein at least one said inteface is selected from the group consisting of coils, capacitors, electromagnetic interfaces, antennas, light generators, sound generators, wired interfaces, communication interfaces, or combinations thereof.

4. The chip board system according to claim 1, wherein said board is three dimensional.

5. The chip board system according to claim 1, wherein said board is configured to be a game and wherein said one or more users are defined as players.

6. The chip board system according to claim 1, wherein said board is configured to be an aid and wherein said one or more users are defined as subjects of said aid, wherein at least one said aid is selected from the group consisting of educational aids, instructional aids, informational aids, supervision aids, detection aids, rescue aids, or combinations thereof.

7. The chip board system according to claim 1, wherein at least one of said one or more chips and/or at least one of said one or more readers are configured to emite and/or to receive one or more electrical fields or one or more magnetic fields, or combinations.

8. The chip board system according to claim 1, wherein at least one of said one or more chips and/or at least one of said one or more readers comprise or are coupled with one or more rotatably mounted antennas.

9. The chip board system according to claim 1, wherein at least one of said one or more chips is a radio frequency identification chip and at least one of said one or more readers is a radio frequency identification reader.

10. The chip board system according to claim 1, further comprising an electronic device including at least a processor and a memory.

11. The chip board system according to claim 1, wherein at least one of said one or more chips and/or at least one of said one or more readers are coupled with a vehicle or with an offshore vessel.

12. The chip board system according to claim 1, further comprising one or more chips and/or one or more readers coupled with a product.

13. A chip board communication method, the method **characterised in that** it comprises the steps of:
- providing one or more board chips;
- reading said one or more board chips with provided one or more readers configured to communicate with at least one of said one or more board chips,
wherein the steps can be repeated and/or interchanged.

14. A chip board navigation method, the method **characterised in that** it comprises the steps of:
- providing one or more board chips in a defined pattern and providing one or more readers configured to communicate with at least one of said one or more board chips and coupled with an at least partially autonomous vehicle or with an at least partially autonomous offshore vessel;
- determining a board parameter by said one or more readers, wherein at least one said board parameter is selected from the group consisting of electric fields parameters, magnetic fields parameters, time messages transit times, sensors output values, topographic maps values, celestial objects values, or combinations thereof;
- defining a navigation parameter, wherein at least one said parameter is selected from the group consisting position data, velocity data, acceleration data, deceleration data, direction of motion data, orientation data, azimuth data, altitude data, water depth data, water currents direction data, water currents speed data, air temperature data, water temperature data, water background shapes, water cycles, wind direction data, wind speed data, distances from any of said one or more board chips, distances from communication satellites, distances from sensors, distances from targets, distances from natural objects, distances from artificial objects, or combinations,
wherein the steps can be repeated and/or interchanged.

15. The chip board navigation method according to claim 18, further comprising one or more chips configurated to communicate with said one or more readers and coupled with at least one of said at least partially autonomous vehicles, at least partially autonomous offshore vessels, products, or combinations.
